# FASCICULE DE BREVET EUROPEEN

(11) **EP 0 589 738 B1**
(45) Date de publication et mention de la délivrance du brevet: **15.07.1998**
(21) Numéro de dépôt: 93402106.4
(22) Date de dépôt: 26.08.1993
(51) Int. Cl.: H04L 29/06

(54) **Procédé et équipement de compression décompression de données pour terminal synchrone**
Verfahren und Einrichtung zur Datenkompression und -dekompression für Synchronsendegerät
Method and apparatus for compressing and decompressing data for a synchronous terminal

(30) Priorité: 27.08.1992 FR 9210328
(43) Date de publication de la demande: 30.03.1994
(73) Titulaire: SAT (Société Anonyme de Télécommunications), 75116 Paris (FR)
(72) Inventeur: Pillan, Philippe, F-75625 Paris Cedex 13 (FR); Baudoin, Georges, F-75625 Paris Cedex 13 (FR)
(74) Mandataire: Cabinet Martinet & Lapoux

(56) Documents cités:
- EP-A- 0 493 286
- WO-A-92/04790
- IEEE NETWORK: THE MAGAZINE OF COMPUTER COMMUNICATIONS. vol. 5, no. 4 , Juillet 1991 , NEW YORK US pages 24 - 33 XP249548 N.MODIRI 'THE ISO REFERENCE MODEL ENTITIES'

## Description

La présente invention concerne de manière générale le domaine de la compression-décompression de données.

L'apparition d'algorithmes puissants de compression-décompression de données, et les avantages en résultant en terme de taux d'occupation des lignes de transmission, ont conduit le CCITT (Comité Consultatif International Télégraphique et Téléphonique) à définir durant l'année 1989 une recommandation de compression de données pour des équipements de terminaison de circuit de données (ETCD) utilisant des procédures de correction d'erreur. Cette recommandation, désignée par Recommandation V.42bis, Genève 1990, est limitée au mode de transmission asynchrone, ou plus précisément arythmique.

Selon cette recommandation, un équipement terminal de traitement de données ETTD, ou terminal, est raccordé à un réseau de transmission à travers un équipement de terminaison de circuit de données ETCD, ou modem. L'équipement terminal de traitement de données ETTD transmet des caractères en mode asynchrone à l'équipement de terminaison de circuit de données ETCD. Ces caractères sont comprimés au fur et à mesure de leur réception par le modem V.42bis, puis groupés et empaquetés pour former une trame avec liaison sécurisée. Cette trame est alors transmise dans le réseau de transmission.

Ainsi, la recommandation V.42bis n'envisage pas le cas d'une transmission en mode synchrone de l'équipement terminal. Dans le cas d'une telle transmission, les données produites par l'équipement terminal ne sont plus des caractères arythmiques, mais des trames plus élaborées.

Le WO-A-92/04780 décrit une méthode et un système ne concernant qu'une compression de données, sans évoquer les problèmes précités. Il ne divulgue aucune suppression de champs dans des trames précédant la compression de données.

Ainsi, antérieurement à la présente invention, demeurait le besoin d'un équipement de terminaison de circuit de données offrant une compression de données pour des équipements terminaux en mode synchrone.

L'invention vise à satisfaire le besoin précité en fournissant à la fois un procède de compression-décompression de trames synchrones et un équipement de terminaison de circuit de données pour la mise en oeuvre du procédé. Cet équipement de terminaison réalise à la fois des fonctions de compression de données et de liaison sécurisée sur des trames synchrones.

A cette fin, un procédé de compression de premières trames de données transmises par un équipement terminal synchrome en des secondes trames de données à transmettre à travers un réseau de transmission d'une part, et de décompression des secondes trames transmises à travers le réseau en des premières trames à recevoir par ledit équipement d'autre part, est tel que défini dans la revendication 1.

Selon une caractéristique de l'invention, particulièrement pour des premières trames de type HDLC, en réception, le procédé comprend entre les étapes de décompression et d'adjonction, un calcul d'une séquence de contrôle de trame en fonction de ladite première trame réduite pour l'adjoindre à ladite première trame réduite.

Selon une première variante, ledit au moins un champ de ladite première trame réduite est au moins l'un des cas parmi les champs d'adresse, de commande et d'information de ladite première trame à transmettre. Selon une seconde variante, ledit au moins un champ de ladite trame réduite est un champ d'information de ladite première trame à transmettre, des champs d'adresse et de commande dans ladite première trame ne subissant pas de compression en émission.

Selon un autre aspect de l'invention, un équipement de terminaison de circuit de données pour la mise en oeuvre du procédé de l'invention est tel que défini dans la revendication 7.

D'autres caractéristiques et avantages de la présente invention apparaîtront plus clairement à la lecture de la description suivante, en référence aux dessins annexés correspondants dans lesquels :
- la figure 1 montre un format typique de trame synchrone transportée par une liaison de données entre équipements terminaux de transmission de données, selon la technique antérieure ;
- la figure 2 montre des éléments constitutifs d'une chaîne de transmission entre deux équipements terminaux de transmission de données;
- la figure 3 est un bloc-diagramme d'un équipement de terminaison de circuit de données selon l'invention montré à la figure 2; et
- la figure 4 est un diagramme temporel schématisant diverses étapes de procédé effectuées en émission et en réception par l'équipement de terminaison de circuit de données selon l'invention montré à la figure 3.

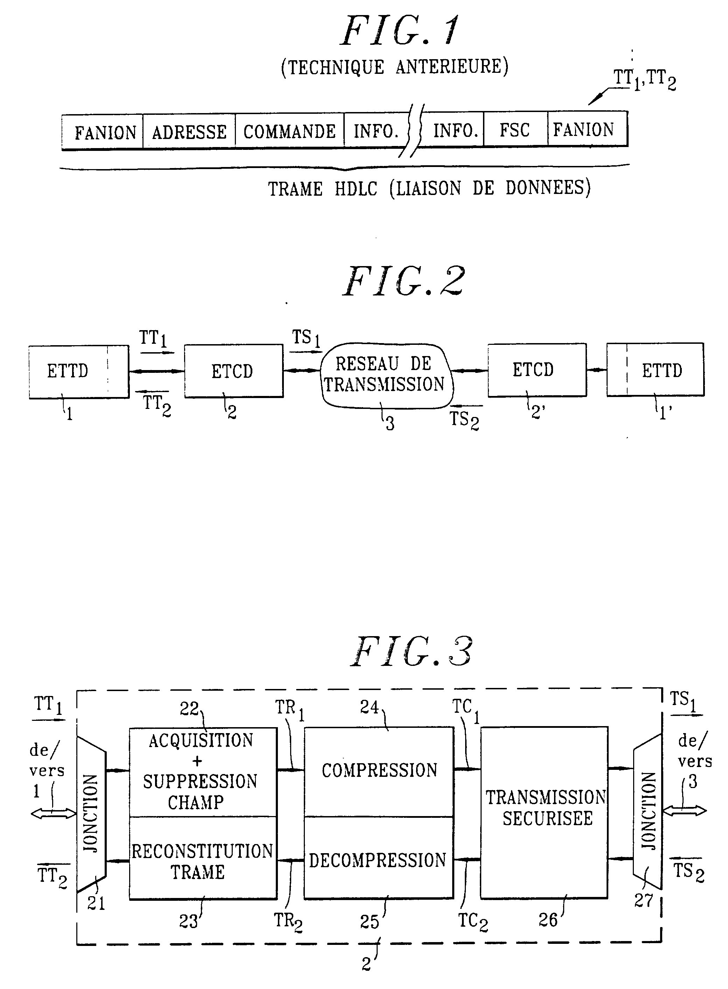

En référence à la figure 1, un format de trame typique, telle que trame LAPD (R.N.I.S.) ou trame LAPB (Réseau de paquets X.25), conforme à la norme HDLC (High Level Data Link Control : Commande de liaison de données à haut niveau) définie par l'ISO (International Organization for Standardization), comprend typiquement des champs de fanion d'ouverture, d'adresse, de commande, d'information et de séquence de contrôle de trame (FCS), et de fanion de fermeture émis suivant cet ordre. Ce format de trame correspond au format requis par le niveau Liaison de données HDLC, permettant l'échange sécurisé de trames entre deux entités de la couche 2 (Liaison), couche 2 définie dans le modèle de référence OSI de l'ISO. Cette couche 2 ou niveau Liaison de données réalise, en outre, les fonctions suivantes :
- la délimitation par fanions;
- le maintien en séquences des trames;
- la détection des erreurs de transmission; et
- le contrôle de flux.

Dans le format de trame montré à la figure 1, dans lequel le champ d'information comprend l'information utile à transmettre fournie par / à des couches supérieures à la couche 2, les champs de fanion, d'adresse, de commande et de séquence de contrôle de trame ont les fonctions suivantes .

Les champs de fanion d'ouverture et fanion de fermeture sont utilisés entre deux couches de niveau 2 de deux équipements quelconques pour une délimitation de trame. Le champ d'adresse identifie la liaison de données sur laquelle des trames sont émises ou reçues, et permet ainsi de différencier différentes liaisons établies. Le champ de commande contribue au contrôle du séquencement des trames, c'est-à-dire à la distinction entre trames. Enfin, le champ de séquence de contrôle de trame sert à la détection des erreurs de transmission de trame, et est par exemple obtenu par codage polynomial de certains ou de tous les autres champs de la trame.

En référence à la figure 2, une chaîne de transmission entre deux équipements terminaux de traitement de données ETTD, ou terminaux distincts, 1 et 1', comprend typiquement, de l'équipement 1 vers l'équipement 1' , un équipement de terminaison de circuit de données ETCD 2 et un réseau de transmission 3, et un autre équipement ETCD 2'.

Selon la technique antérieure, pour un réseau de transmission donné et pour des équipements terminaux 1 et 1' asynchrones, des équipements de terminaison respectifs 2 et 2' satisfaisant à la recommandation V.42bis sont utilisés pour opérer une compression des données transmises par les deux équipements terminaux 1 et 1' dans le réseau 3. La couche 2 (Liaison) , relativement au modèle de référence OSI de l'ISO, n'est "intégrée" que dans les équipements de terminaison 2 et 2'. Pour chacun des deux équipements terminaux, tel que l'équipement 1, les caractères asynchrones sont transmis par l'équipement terminal 1 vers l'équipement de terminaison 2. Ces caractères sont regroupés et comprimés dans l'équipement 2 pour former un champ d'information. Puis, toujours au moyen de l'équipement de terminaison 2, le champ d'information est "empaqueté" par des champs relatifs à une transmission sécurisée de couche "Liaison" pour être transmis dans le réseau de transmission 3, en des trames telles que celle représentée à la figure 1. En réception, dans l'équipement de terminaison, tel que l'équipement 2' , chaque champ d'information comprimé et "empaqueté" est "dépaqueté" par une couche Liaison, et le champ d'information restant est décomprimé de manière à restituer les caractères asynchrones à l'équipement terminal 1'.

Dans ce qui précède, il est fait abstraction de la fonction PAD (assemblage-désassemblage de paquet) supposée connue par l'homme du métier dans le cadre d'un accès de terminaux asynchrones à un réseau X.25.

Selon la présente invention, l'opération de compression ne peut être effectuée telle que décrite ci-dessus puisque les équipements terminaux 1 et 1' sont de type synchrone. Ce ne sont plus des caractères arythmiques qui sont transmis par les équipements terminaux 1 et 1', mais des trames par exemple au format HDLC. Dans le cadre de l'invention, les équipements terminaux 1 et 1' intègrent une couche Liaison. Un équipement de terminaison 2 ou 2' satisfaisant à la Recommendation V.42 bis ne peut être directement utilisé, et le procédé de compression de données, c'est-à-dire de trames, est établi notamment en vue d'optimiser le taux de compression des données, tout en considérant que ce procédé opére sur des trames et non sur des caractères asynchrones. Dans ce cadre, les équipements de terminaison 2 et 2' incluent des étapes spécifiques de traitement des trames en émission et en réception.

Il est à noter que cette compression des données a pour objectif principal de procurer un gain conséquent pour l'usager en terme de taux d'occupation des liaisons qu'il utilise.

En référence à la figure 3, un équipement de terminaison ETCD, tel que l'équipement 2, comprend, selon l'invention, deux jonctions 21 et 27 respectivement associées à la ligne bidirectionnelle le reliant à l'équipement terminal de traitement de données 1 et à une ligne de transmission bidirectionnelle du réseau 3. Les liaisons établies entre l'équipement de terminaison 2 et, d'une part, l'équipement terminal 1, et, d'autre part, le réseau 3, sont par exemple du type full-duplex (transmission simultanée suivant les deux sens).

Pour l'émission vers le réseau 3, l'équipement de terminaison 2 comprend des moyens d'acquisition et de suppression de champ 22, des moyens de compression 24 et des moyens de transmission sécurisée 26 agencés en cascade. Pour la réception à partir du réseau 3, l'équipement de terminaison 2 comprend les moyens de transmission sécurisée 26, des moyens de décompression 25 et des moyens de reconstitution de trame 23 agencés en cascade.

Chaque première trame TT₁ , par exemple au format HDLC, produite par l'équipement terminal 1 et à transmettre sous forme de seconde trame TS₁ à travers le réseau 3, est reçue par la jonction 21 constituant une interface avec la ligne reliant l'équipement terminal 1 et l'équipement de terminaison 2. Bien que représentée sous la forme d'un bloc-diagramme fonctionnel, l'équipement de terminaison 2 selon l'invention constitue une interface de télécommunications et est organisée autour d'un microprocesseur. Les moyens 22 effectuent un enregistrement de chaque première trame TT₁ reçue à travers la jonction 21. Notamment ces moyens d'acquisition 22 détectent le fanion d'ouverture et le fanion de fermeture dans chaque trame TT₁ afin de mémoriser l'ensemble des quatre champs de la trame inclus entre ces deux fanions, dans une mémoire-tampon. La mémoire-tampon mémorise ainsi pour chaque trame acquise TT₁ un champ d'adresse, un champ de commande, un champ d'information, et un champ de séquence de contrôle de trame, et les deux champs de fanion sont supprimés.

Une vérification de transmission correcte entre l'équipement terminal 1 et l'équipement de terminaison 2 est réalisée pour les trames mémorisées. Cette vérification consiste à comparer, pour chaque trame mémorisée, les données du champ de séquence de contrôle de trame FCS avec les données d'autres champs mémorisés de la trame TT₁ préalablement codés selon un codage de contrôle d'erreur identique au codage réalisé par la couche "Liaison" dans l'équipement terminal 1. Si cette comparaison donne un résultat positif, une suppression du champ de séquence de contrôle de trame FCS est effectuée dans la trame TT₁ afin de constituer une première trame réduite TR₁. Dans le cas inverse, la trame erronée TT₁ n'est pas prise en compte par les moyens de compression 24. Lors d'une comparaison positive, le champ de séquence de contrôle de trame est supprimé afin d'atteindre l'un des objectifs principaux de l'invention consistant à réduire au maximum la taille des données à comprimer de la trame de liaison sécurisée (détection des erreurs, délimitation de trame...) entre les deux équipements 2 et 2' (figure 2). Après que certains champs de la trame réduite TR₁ soient comprimés, tel qu'expliqué ci-après, par les moyens 24 en une première trame réduite comprimée TC₁ , il est nécessaire de constituer, à partir de cette dernière, une trame réduite comprimée sécurisée, dite seconde trame TS₁, supportant les fonctions de délimitation par fanions, contrôle de séquence, contrôle d'erreur, contrôle de flux..., telles que définies par l'établissement d'une liaison sécurisée, pour une transmission sécurisée à travers le réseau 3. A une trame réduite comprimée TC₁ sont ainsi adjoints par les moyens 26, en outre, un champ de contrôle de trame calculé à partir des champs de la trame réduite comprimée TC₁ , et des champs de fanion. La procédure d'insertion de bits à l'état "0", propre à la norme HDLC, permettant d'éviter la reproduction du format de fanion par les données INFO de l'usager est également implantée dans les moyens 26. Supposée connue par l'homme du métier, cette procédure ne sera pas décrite plus en détail par la suite.

Selon une première variante de l'invention, après suppression des champs de fanion et de séquence de contrôle de trame dans une trame HDLC initiale TT₁ en une trame réduite TR₁ , les moyens de compression 24 compriment les données dans tous les champs restants, savoir les champs d'adresse, de commande et d'information, dans la trame réduite pour constituer une trame réduite comprimée TC₁.

Selon une seconde variante de l'invention, les champs d'adresse et commande sont transmis tels quels dans le réseau 3 à travers les moyens de transmission sécurisée 26 sans être comprimés. Dans ce cas, seules les données du champ d'information dans la trame TR₁ sont comprimées. Cette seconde variante résulte d'une considération inhérente aux procédés connus de compression dynamique. En effet, selon ces procédés de compression, deux dictionnaires identiques sont associés respectivement au compresseur et au décompresseur. Ces dictionnaires sont mis à jour en fonction des données à comprimer, et des mots-codes sont respectivement associés à des chaînes de caractères des données reçues. Ainsi, compte tenu de la limitation en taille du dictionnaire, seules les chaînes de caractères les plus fréquemment transmises permettent d'atteindre des taux de compression conséquents. Or par nature même, les champs d'adresse et de commande contiennent des données qui ne présentent aucune similitude d'une trame à la trame suivante. C'est la raison pour laquelle les champs de commande et d'adresse peuvent être transmis sans compression.

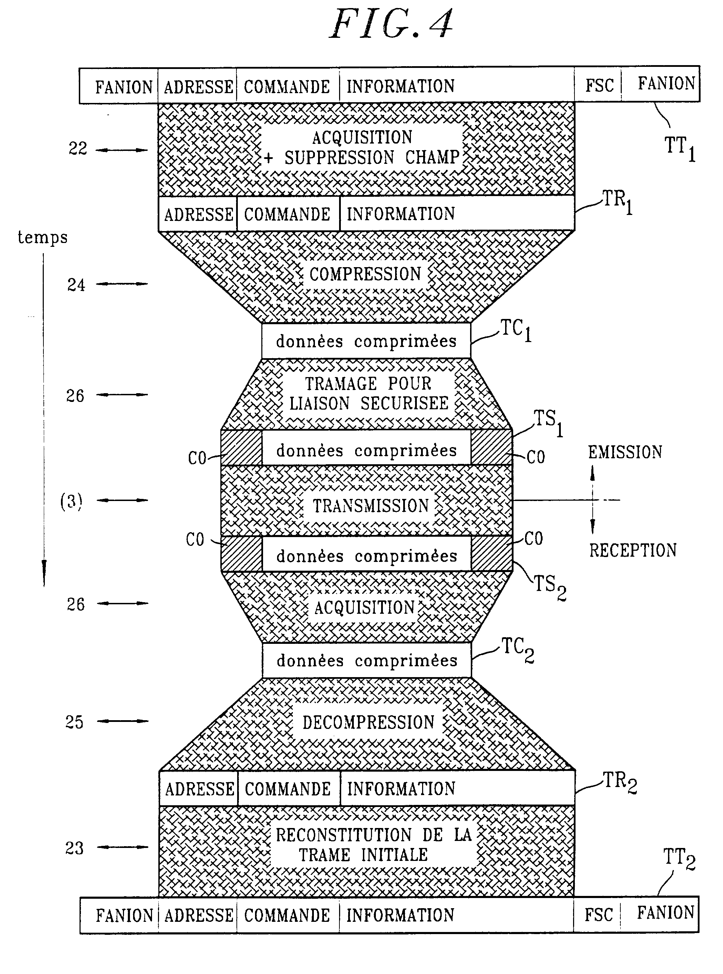

Après compression des données de certains champs selon les deux variantes décrites ci-dessus, ces données comprimées, ou comprimées et non comprimées, sont transmises sous forme de trames réduites comprimées sécurisées, dites secondes trames TS₁ dans le réseau 3 à travers les moyens de transmission sécurisée 26 et la jonction 27. Plus précisément, les moyens de transmission sécurisée 26 reçoivent, pour chaque trame HDLC initiale TT₁, les données comprimées, ou comprimées et non comprimées, des champs d'adresse, de commande et d'information selon les deux variantes décrites ci-dessus, et forment une seconde trame TS₁ comprenant des fanions de délimitation, une séquence de contrôle de seconde trame, un champ d'identification de la liaison de données, etc..., qui encadrent les données comprimées, ou comprimées et non comprimées de ces champs d'adresse, de commande et d'information, comme cela est illustré par des champs ombrés CO au milieu de la figure 4. La trame TS₁ est transmise par la jonction 27 assurant l'interface avec la ligne de transmission du réseau 3.

Une partie supérieure du diagramme temporel de la figure 4 schématise tous les traitements effectués en émission par les moyens 22, 24 et 26 de l'équipement de terminaison de circuit de données 2 selon l'invention, sur une trame au format HDLC TT₁ transmise par l'équipement terminal 1 et convertie successivement en des trames TR₁, TC₁, et TS₁. Les trames TS₁ transitant entre les deux équipements de terminaison 2 et 2' comprennent, d'une part des champs comprimés, ou des champs comprimés et non comprimés et d'autre part, des champs relatifs à la liaison sécurisée établie entre les moyens de transmission sécurisée respectifs 26 des deux équipements 2 et 2'.

En se référant de nouveau à la figure 3, le fonctionnement en réception de l'équipement 2 selon l'invention est maintenant décrit, en supposant que l'équipement de terminaison 2' transmet dans le réseau 3 des secondes trames TS₂ vers l'équipement terminal 2. En réception dans l'équipement 2 sont utilisés les moyens de transmission sécurisée 26, les moyens de décompression 25 et les moyens de reconstitution de trame 23.

Les moyens de transmission sécurisée 26 reçoivent à travers la jonction 27 des secondes trames réduites comprimées sécurisées TS₂ transmises par l'équipement 2' (figure 1) dont certains champs non comprimés sont relatifs, en outre, à la liaison de données sécurisée établie entre les moyens de transmission sécurisée dans l'équipement 2' et les moyens de transmission sécurisée 26 dans l'équipement 2. En réception, les moyens de transmission sécurisée 26 effectuent des traitements de contrôle d'erreur, délimitation de secondes trames, contrôle de séquence de secondes trames, contrôle de flux... L'homme du métier appréciera que la liaison sécurisée établie entre les moyens de transmission sécurisée des deux équipements 2' et 2 dépend du protocole au niveau liaison qui est choisi. Différentes normes ou recommandations connues de niveau Liaison ( Niveau 2 du Modèle de référence OSI) peuvent être choisies pour implanter ce protocole .

Après que l'ensemble des traitements relatifs à la liaison sécurisée soit effectué avec d'éventuelles répétitions de transmission de secondes trames TS₂ dans le cas de détection d'erreur, les trames TS₂ sont "dépaquetées" des champs dépendant de la transmission sécurisée pour constituer des premières trames réduites comprimées TC₂. L'ensemble des champs comprimés en émission est appliqué par le port de sortie des moyens de transmission sécurisée 26 au port d'entrée des moyens de décompression 25 afin d'être décomprimés en des premières trames réduites TR₂ incluant des champs d'adresse, de commande, et d'information telles que transmises initialement par l'équipement terminal 1'.

Il est ensuite nécessaire de reformer une trame TT₂ compatible avec le niveau Liaison de l'équipement terminal 1. C'est le rôle des moyens de reconstitution de trame 23. Il est rappelé qu'en émission, à la fois les "premiers" champs de fanion d'ouverture, de fanion de fermeture et de séquence de contrôle de trame sont supprimés par les moyens 22. Ainsi les moyens de reconstitution de trame 23 réempaquetent les données des champs d'adresse, de commande, d'information par des fanions d'ouverture et de fermeture de trame et une séquence de contrôle de trame afin de fournir une première trame compatible avec le niveau Liaison de l'équipement terminal 1. La séquence de contrôle de trame FCS est recalculée à partir des champs d'adresse, de commande et d'information de la trame décomprimée TR₂ produite en sortie des moyens de décompression 25.

Il est à noter que cette séquence de contrôle de trame recalculée ne participe pas véritablement à la détection d'erreurs dues à la transmission à travers le réseau 3 puisqu'elle est supprimée en émission dans l'équipement 2' et recalculée en réception dans l'équipement 2. Néanmoins cette double opération garantit la transparence des équipements 2 et 2' vis à vis des équipements terminaux 1 et 1'.

En partie inférieure du diagramme temporel de la figure 4 est résumé le traitement d'une trame qui est reçue TS₂ dans l'équipement de terminaison 2 décrit ci-dessus et qui est convertie successivement en des trames TC₂, TR₂ et TT₂.

## Revendications

1. Procédé de compression de premières trames de données transmises par un équipement terminal synchrone (1) en des secondes trames de données à transmettre à travers un réseau de transmission (3) d'une part, et de décompression des secondes trames transmises à travers le réseau en des premières trames à recevoir par ledit équipement d'autre part, chaque première trame (TT₁, TT₂) comprenant successivement un champ de fanion d'ouverture, un champ d'adresse, un champ de commande, un champ d'information, un champ de séquence de contrôle de trame et un champ de fanion de fermeture, caractérisé par les étapes suivantes :
a) en transmission, pour chaque première trame à transmettre (TT₁), successivement:
a1) suppression d'au moins l'un des champs de fanion d'ouverture, de séquence de contrôle de trame et de fanion de fermeture contenus dans ladite première trame pour constituer une première trame réduite (TR₁),
a2) compression de données d'au moins un champ de ladite première trame réduite pour constituer une première trame réduite comprimée (TC₁), et
a3) adjonction à ladite première trame réduite comprimée, d'au moins une séquence de contrôle d'erreur basée sur la première trame réduite comprimée (TC₁) pour constituer une seconde trame (TS₁) à transmettre dans le réseau de transmission (3), et
b) en réception, pour chaque seconde trame (TS₂) reçue à travers ledit réseau (3), successivement:
b1) suppression d'au moins la séquence de contrôle d'erreur basée sur la première trame réduite comprimée (TC₁) dans ladite seconde trame reçue pour constituer une première trame réduite comprimée (TC₂),
b2) décompression de ladite première trame réduite comprimée (TC₂) pour constituer une première trame réduite (TR₂), et
b3) adjonction d'au moins l'un de champs de fanion d'ouverture, de séquence de contrôle de trame et de fanion de fermeture, à ladite première trame réduite (TR₂) pour reconstituer une première trame (TT₂) à recevoir par ledit équipement.

2. Procédé conforme à la revendication 1, comprenant, en réception, entre les étapes de décompression et d'adjonction, un calcul d'une séquence de contrôle de trame en fonction de ladite première trame réduite (TR₂) pour l'adjoindre à ladite première trame recuite (TR₂).

3. Procédé conforme à la revendication 1 ou 2, caractérisé en ce que les transmission et réception de premières trames (TT₁, TT₂) par l'équipement terminal (1) s'effectuent en mode full-duplex.

4. Procédé conforme à l'une quelconque des revendications 1 à 3, caractérisé en ce que ledit au moins un champ de ladite première trame réduite (TR₁) est au moins l'un des champs parmi les champs d'adresse, de commande et d'information de ladite première trame à transmettre (TT₁).

5. Procédé conforme à l'une quelconque revendications 1 à 3, caractérisé en ce que ledit au moins un champ de ladite trame réduite (TR₁) est un champ d'information de ladite première trame à transmettre (TT₁), des champs d'adresse et de commande dans ladite première trame (TT₁) ne subissant pas de compression en émission.

6. Procédé conforme à l'une quelconque des revendications 2 à 5, caractérisé en ce que des champs de fanion sont adjoints et supprimés concomitamment avec la séquence de contrôle d'erreur basée sur la première trame réduite comprimée (TC₁), respectivement aux étapes a3) et b1).

7. Equipement de terminaison de circuit de données (2,2') pour comprimer des premières trames de données transmises par un équipement terminal synchrone (1) en des secondes trames de données à transmettre à travers un réseau de transmission (3) d'une part, et pour décompresser des secondes trames transmises à travers le réseau en des premières trames à recevoir par ledit équipement d'autre part, chaque première trame (TT₁, TT₂) comprenant successivement un champ de fanion d'ouverture, un champ d'adresse, un champ de commande, un champ d'information, un champ de séquence de contrôle de trame et un champ de fanion de fermeture, caractérisé en ce qu'il comprend
des moyens d'émission incluant :
- des moyens (22) pour acquérir des premières trames (TT₁) transmises par l'équipement terminal (1) à travers des premiers moyens de jonction (21) d'interface avec l'équipement terminal (1),
- des moyens (22) pour supprimer au moins l'un des champs de fanion d'ouverture, de séquence de contrôle de trame et de fanion de fermeture contenus dans les premières trames acquises afin de produire des premières trames réduites (TR₁),
- des moyens (24) pour comprimer les premières trames réduites en des premières trames réduites comprimées (TC₁), et
- des moyens de transmission sécurisée (26) pour adjoindre aux premières trames réduites comprimées, au moins une séquence de contrôle d'erreur basée sur la première trame réduite comprimée (TC₁) afin de produire lesdites secondes trames (TS₁) à transmettre dans le réseau (3) à travers des seconds moyens de jonction (27) d'interface avec le réseau, et
des moyens de réception incluant :
- des moyens de réception sécurisée (26) pour retirer au moins la séquence de contrôle d'erreur basée sur la première trame réduite comprimée (TC₁) dans les secondes trames (TS₂) reçues à travers lesdits seconds moyens de jonction (27) afin de produire des premières trames réduites comprimées (TC₂),
- des moyens (25) pour décompresser les premières trames réduites comprimées en des premières trames réduites (TR₂), et
- des moyens (23) pour adjoindre au moins l'un de champs de fanion d'ouverture, de séquence de contrôle de trame et de fanion de fermeture auxdites premières trames réduites afin de reconstituer des premières trames (TT₂) et les transmettre à l'équipement terminal (1) à travers lesdits premiers moyens de jonction (21).

## Patentansprüche

1. Verfahren zur Kompression erster Rahmen von Daten, die von einem Synchronendgerät (1) übertragen werden, zu zweiten Datenrahmen, die über ein Übertragungsnetz (3) übertragen werden sollen einerseits, und zur Dekompression der zweiten über das Netz übertragenen Rahmen in erste Rahmen, die von dem genannten Gerät empfangen werden sollen, andererseits, wobei jeder erste Rahmen (TT₁, TT₂) nacheinander ein Startkennzeichenfeld, ein Adressenfeld, ein Steuerfeld, ein Informationsfeld, ein Feld mit einer Rahmenkontrollsequenz und ein Endkennzeichenfeld enthält, gekennzeichnet durch die folgenden Schritte:
a) für die Übertragung, für jeden zu übertragenden ersten Rahmen (TT₁), nacheinander:
a1) Unterdrückung mindestens eines der Felder für das Startkennzeichen, die Rahmenkontrolisequenz oder das Endkennzeichen, die in diesem ersten Rahmen enthalten sind, um einen reduzierten ersten Rahmen (TR₁) zu bilden,
a2) Kompression von Daten mindestens eines Feldes dieses reduzierten ersten Rahmens, um einen komprimierten reduzierten ersten Rahmen (TC₁) zu bilden, und
a3) Anfügen an diesen komprimierten reduzierten ersten Rahmen mindestens einer Fehlerkontrollsequenz, die auf dem komprimierten reduzierten ersten Rahmen (TC₁) beruht, um einen zweiten Rahmen (TS₁) zu bilden, der im Übertragungsnetz (3) übertragen werden soll, und
b) für den Empfang, für jeden über dieses Netz (3) empfangenen zweiten Rahmen (TS₂), nacheinander:
b1) Unterdrückung mindestens der auf dem komprimierten reduzierten ersten Rahmen (TC1) beruhenden Fehlerkontrollsequenz in diesem empfangenen zweiten Rahmen, um einen komprimierten reduzierten ersten Rahmen (TC₂) zu bilden,
b2) Dekompression dieses komprimierten reduzierten ersten Rahmens (TC₂), um einen reduzierten ersten Rahmen (TR₂) zu bilden, und
b3) Anfügen mindestens eines der Felder für das Startkennzeichen, die Rahmenkontrollsequenz und das Endkennzeichen an den reduzierten ersten Rahmen (TR₂), um einen ersten Rahmen (TT₂) wiederherzustellen, der von dem genannten Gerät empfangen werden soll.

2. Verfahren nach Patentanspruch 1, beim Empfang zwischen den Schritten zur Dekompression und zum Anfügen eine Berechnung einer Rahmenkontrollsequenz in Abhängigkeit vom genannten reduzierten ersten Rahmens (TR₂) enthaltend, um sie dem genannten reduzierten ersten Rahmen anzufügen.

3. Verfahren nach Patentanspruch 1 oder 2, dadurch gekennzeichnet, daß Übertragung und Empfang erster Rahmen (TT₁, TT₂) durch das Endgerät (1) im Vollduplexbetrieb erfolgen.

4. Verfahren nach irgendeinem der Patentansprüche 1 bis 3, dadurch gekennzeichnet, daß das genannte mindestens eine Feld des genannten reduzierten ersten Rahmens (TR₁) mindestens eins der Felder für Adresse, Steuerung und Information des genannten zu übertragenden ersten Rahmens (TT₁) ist.

5. Verfahren nach irgendeinem der Patentansprüche 1 bis 3, dadurch gekennzeichnet, daß das genannte mindestens eine Feld des genannten reduzierten ersten Rahmens (TR₁) ein Informationsfeld des genannten zu übertragenden ersten Rahmens (TT₁) ist, während Felder für Adresse und Steuerung im ersten Rahmens (TT₁) bei der Übertragung keiner Kompression unterliegen.

6. Verfahren nach irgendeinem der Patentansprüche 2 bis 5, dadurch gekennzeichnet, daß Kennzeichenfelder gleichzeitig mit der Fehlerkontrollsequenz, die auf dem komprimierten reduzierten ersten Rahmen (TC₁) beruht, in den Schritten a3) und b1) angefügt bzw. unterdrückt werden.

7. Endgerät einer Datenverbindung (2, 2'), um einerseits erste Datenrahmen, die von einem Synchronendgerät (1) übertragen werden, zu zweiten Datenrahmen zu komprimieren, die über ein Übertragungsnetz (3) übertragen werden sollen, und um andererseits zweite, über das Netz übertragene Rahmen zu ersten Rahmen zu dekomprimieren, die durch das genannte Gerät empfangen werden sollen, wobei jeder erste Rahmen (TT₁, TT₂) nacheinander ein Startkennzeichenfeld, ein Adressenfeld, ein Steuerfeld, ein Informationsfeld, ein Feld mit einer Rahmenkontrollsequenz und ein Endkennzeichenfeld enthält, dadurch gekennzeichnet, daß es
Übertragungsmittel enthält, umfassend:
- Mittel (22), um erste Rahmen (TT₁) zu erfassen, die vom Endgerät (1) durch erste Verbindungsmittel (21), die die Schnittstelle mit dem Endgerät (1) darstellen, übertragen werden,
- Mittel (22) zur Unterdrückung mindestens eines der Felder für das Startkennzeichen, die Rahmenkontrollsequenz oder das Endkennzeichen, die in diesen ersten erfaßten Rahmen enthalten sind, um reduzierte erste Rahmen (TR₁) zu bilden,
- Mittel (24) zur Kompression der reduzierten ersten Rahmen, zu komprimierten reduzierten ersten Rahmen (TC₁), und
- Mittel zur abgesicherten Übertragung (26), um an diese komprimierten reduzierten ersten Rahmen mindestens eine Fehlerkontrollsequenz anzufügen, die auf dem komprimierten reduzierten ersten Rahmen (TC₁) beruht, um die genannten zweiten Rahmen (TS₁) zu bilden, die über zweite Verbindungsmittel (27), die eine Schnittstelle mit dem Netz bilden, ins Übertragungsnetz (3) übertragen werden sollen, und Empfangsmittel, umfassend:
- Mittel zum abgesicherten Empfang (26), zum Herausziehen mindestens der auf dem komprimierten reduzierten ersten Rahmen (TC1) beruhenden Fehlerkontrollsequenz in den über die genannten zweiten Verbindungsmittel 127) empfangenen zweiten Rahmen (TS₂), um komprimierte reduzierte erste Rahmen (TC₂) zu bilden,
- Mittel (25) zur Dekompression der komprimierten reduzierten ersten Rahmen zu reduzierten ersten Rahmen (TR₂), und
- Mittel (23) zum Anfügen mindestens eines der Felder für das Startkennzeichen, die Rahmenkontrollsequenz und das Endkennzeichen an die reduzierten ersten Rahmen, um erste Rahmen (TT₂) wiederherzustellen und sie über die genannten ersten Verbindungsmittel (21) an das Endgerät (1) zu übertragen.

## Claims

1. A method for on the one hand compressing first data frames transmitted from a synchronous terminal equipment (1) into second data frames to be transmitted through a transmission network (3), and on the other hand decompressing second data frames transmitted through the network into first frames to be received by said equipment, each first frame (TT₁, TT₂) including successively an opening flag field, an address field, a control field, an information field, a frame checking sequence field and a closing flag field, characterized by the following steps :
a) on transmit, for each first frame to be transmitted (TT₁), successively :
a1) suppressing at least one of the opening flag, frame checking sequence and closing flag fields included in said first frame thereby forming a first reduced frame (TR₁),
a2) compressing data of at least one field in said first reduced frame thereby forming a first compressed reduced frame (TC₁), and
a3) adding to said first compressed reduced frame, at least an error checking sequence based on the first compressed reduced frame (TC₁) thereby forming a second frame (TS₁) to be transmitted through the transmission network (3), and
b) on receive, for each second frame (TS₂) received through said network (3), successively :
b1) suppressing at least the error checking sequence based on the first compressed reduced frame (TC₁) in said received second frame thereby forming a first compressed reduced frame (TC₂),
b2) decompressing said first compressed reduced frame (TC₂) thereby forming a first reduced frame (TR₂), and
b3) adding at least one of opening flag, frame checking sequence and closing flag fields, to said first reduced frame (TR₂) thereby reconstructing a first data frame (TT₂) to be received by said equipment.

2. A method according to the claim 1, comprising, on receive, between the decompressing and adding steps, computating a frame checking sequence depending on said first reduced frame (TR₂) to add it to said first reduced frame (TR₂).

3. A method according to the claim 1 or 2, characterized in that the terminal equipment (1) transmits and receives first frames (TT₁, TT₂) in a full-duplex mode.

4. A method according to any one of claims 1 to 3, characterized in that said at least one field in said first reduced frame (TR₁) is at least one of fields amongst address, control and information fields in said first frame (TT₁) to be transmitted.

5. A method according to any one of the claims 1 to 3, characterized in that said at least one field in said reduced frame (TR₁) is an information field in said first frame (TT₁) to be transmitted, address and control fields in said first frame (TT₁) being not compressed on transmit.

6. A method according to any one of claims 2 to 5, characterized in that flag fields are added and supprimed concomitant with the error checking sequence based on the first compressed reduced frame (TC₁), respectively to the steps a3) and b1).

7. A data circuit-terminating equipment (2, 2') for on the one hand compressing first data frames transmitted from a synchronous terminal equipment (1) into second data frames to be transmitted through a transmission network (3), and on the other hand decompressing second frames transmitted through the network into first frames to be received by said equipment, each first frame (TT₁, TT₂) including successively an opening flag field, an address field, a control field, an information field, a frame checking sequence field and a closing flag field, characterized in that it comprises :
transmitting means including:
- means (22) for storing first frames (TT₁) transmitted from the terminal equipment (1) through first junction means (21) interfacing with the terminal equipment (1),
- means (22) for suppressing at least one of the opening flag, frame checking sequence and closing flag fields contained in the first stored frames thereby deriving first reduced frames (TR₁),
- means (24) for compressing the first reduced frames into first compressed reduced frames (TC₁), and
- safe transmitting means (26) for adding to the first compressed reduced frames, at least one error checking sequence based on the first compressed reduced frame (TC₁) thereby deriving said second frames (TS₁) to be transmitted in the network (3) through second junction means (27) interfacing with the network, and
receiving means including :
- safe receiving means (26) for suppressing at least the erreur checking sequence based on the first compressed reduced frame (TC₁) in the second frames (TS₂) received through said second junction means (27) thereby deriving first compressed reduced frames (TC₂),
- means (25) for decompressing the first compressed reduced frame into first reduced frames (TR₂), and
- means (23) for adding at least one opening flag, frame checking sequence and closing flag fields to said first reduced frames thereby reconstructing first frames (TT₂) and transmitting them to the terminal equipment (1) through said first junction means (21).
